# EUROPÄISCHE PATENTSCHRIFT

(11) **EP 2 411 879 B1**
(45) Veröffentlichungstag und Bekanntmachung des Hinweises auf die Patenterteilung: **30.01.2013**
(21) Anmeldenummer: 10712928.0
(22) Anmeldetag: 26.03.2010
(51) Int. Cl.: G05B 19/418, D21F 9/00, D21G 9/00

(54) **SYSTEM ZUR COMPUTERGESTÜTZTEN OPTIMIERUNG DES GESAMTWIRKUNGSGRADES EINER PRODUKTIONSANLAGE**
SYSTEM FOR THE COMPUTER-AIDED OPTIMIZATION OF THE OVERALL EFFICIENCY OF A PRODUCTION INSTALLATION
SYSTÈME ASSISTÉ PAR ORDINATEUR D'OPTIMISATION DU RENDEMENT GLOBAL D'UNE INSTALLATION DE PRODUCTION

(30) Priorität: 26.03.2009 DE 102009001872
(43) Veröffentlichungstag der Anmeldung: 01.02.2012
(73) Patentinhaber: Voith Patent GmbH, 89522 Heidenheim (DE)
(72) Erfinder: MÜNCH, Rudolf, 89551 Königsbronn (DE); WALTHER, Thomas, 59840 Vimmerby (SE)
(86) Internationale Anmeldenummer: PCT/EP2010/053996
(87) Internationale Veröffentlichungsnummer: WO 2010/109006

(56) Entgegenhaltungen:
- DE-A1-102004 032 005
- US-A1- 2005 143 846

## Beschreibung

Die Erfindung betrifft ein System zur computergestützten Optimierung des Gesamtwirkungsgrades einer Produktionsanlage oder zumindest einer Teileinheit einer Produktionsanlage zur Herstellung und/oder Veredelung einer Materialbahn.

Bei Anlagen zur Papierherstellung handelt es sich um technisch aufwändige Großanlagen, die neben der eigentlichen Papiermaschine mit Nassteil, Trockenteil, Kalander, Roller und zugehörigen Peripherieeinheiten vorgeschaltete Einheiten wie zum Beispiel Flotation, Sortierung, Deculatoren sowie nachgeschaltete Systeme wie Rollenwickeleinheiten sowie Rollenschneidmaschinen, die Rollenverpackung und den Rollentransport umfassen. Dazu gehören die jeweils erforderlichen elektrischen Antriebe, Pumpen, Vakuumanlagen, Chemikalienaufbereitung, Druckluftversorgung und/oder dergleichen.

Bei der Papiererzeugung in einer solchen Anlage fällt nun sehr viel Energie an, die bisher nicht direkt wiederverwendet werden kann, was den Gesamtwirkungsgrad der Anlage deutlich verringert.

So treten in der Produktionsanlage beispielsweise Energieverluste in Form von Abwärme auf höherem Temperatur wie insbesondere überschüssiger Dampf bei Bahnabrissen und in Form von Abwärme aus Bremsenergie auf, wie insbesondere beim Bremsen von vollen Tambouren, dem Herunterfahren von Einheiten wie zum Beispiel einem Rollenschneider usw.

In der DE 10 2004 032 005 A1 ist beispielsweise ein System zur Steuerung eines Antriebsmechanismus für eine Walze gezeigt. Bei diesem System wird der Antriebsmotor auch als Generator verwendet. Die dabei erzeugte elektrische Energie kann zur Versorgung von Energienutzungskomponenten verwendet werden und in einer Energiespeicherkomponente zwischengespeichert werden.

Die US 2005/0143846 A1 offenbart ein multivariables Alternativenergiesystem, das eine Vielzahl von Modi aufweist, wobei das System derart konfiguriert ist, dass von einer Elektroenergiespeicherungsvorrichtung und einer Alternativenergieerzeugungsvorrichtung aus gearbeitet werden kann.

Es ist bereits bekannt, zur Nutzung von Abwärme Wärmetauscher, Wärmepumpen, thermoelektrische Generatoren (TEG) oder der Erzeugung von elektrischer Energie aus Wärme dienende Heißluft-Generatoren einzusetzen, wie sie in der DE 10 2006 018 446 A1 beschrieben sind.

Beim Abbremsen elektrischer Antriebe kann Bremsenergie teilweise direkt in elektrische Energie umgewandelt und in das Spannungsversorgungsnetz eingespeist werden. Die entsprechende Energiemenge ist jedoch trotzdem verloren, wenn nicht gleichzeitig ein Verbraucher diese Energiemenge abfordert. So können Kraftwerke ihre Energieproduktion in der kurzen Zeitspanne, in der die Bremsenergie anfällt, nicht drosseln.

In der DE 10 2007 006 960 A1 ist bereits eine Vorrichtung zur Trocknung einer Faserstoffbahn mittels Heißluft beschrieben, bei der beim Trocknungsvorgang anfallende Abluft bei der Bereitstellung der Heißluft mit genutzt wird.

Die sinnvollste Möglichkeit, in der Produktionsanlage anfallende Energie wiederzuverwenden, besteht darin, sie zunächst zwischenzuspeichern und dann insbesondere langsam bedarfsgerecht wieder abzurufen. Die verschiedenen in Frage kommenden Speichermedien weisen jedoch jeweils spezifische Nachteile auf, was die Einsatzmöglichkeiten begrenzt.

Der Erfindung liegt die Aufgabe zugrunde, ein System zur computergestützten Optimierung des Gesamtwirkungsgrades einer Produktionsanlage oder zumindest einer Teileinheit einer Produktionsanlage zur Herstellung und/oder Veredelung einer Materialbahn zu schaffen, das es ermöglicht, in der Produktionsanlage anfallende Energie möglichst umfassend wieder zu verwenden und bedarfsgerecht an die unterschiedlichen Energienutzer der Produktionsanlage zu verteilen.

Dies wird gemäß der Erfindung zumindest im Wesentlichen erreicht durch zwischen einerseits einer Mehrzahl von unterschiedlichen Energiequellen und andererseits einer Mehrzahl von unterschiedlichen Energiespeicherkomponenten vorgesehene erste Verschaltungsmittel, die zur wahlweisen Verbindung wenigstens einer der unterschiedlichen Energiequellen mit wenigstens einer der unterschiedlichen Energiespeicherkomponenten ansteuerbar sind,
zwischen einerseits der Mehrzahl von unterschiedlichen Energiespeicherkomponenten und anderseits einer Mehrzahl von unterschiedlichen Energienutzerkomponenten der Produktionsanlage vorgesehene zweite Verschaltungsmittel, die zur wahlweisen Verbindung wenigstens einer der unterschiedlichen Energiespeicherkomponenten mit wenigstens einer der unterschiedlichen Energienutzerkomponenten ansteuerbar sind, und
eine computerbasierte Steuereinheit, die dazu ausgeführt ist, die Verschaltungsmittel in Abhängigkeit von Kenntnissen über zumindest die unterschiedlichen Eigenschaften der unterschiedlichen Energiespeicherkomponenten anzusteuern, um bei der Versorgung der Energienutzerkomponenten über die zwischengespeicherte Energie aufgrund einer Energiewandlung auftretende Verluste zu minimieren.

Durch die in Abhängigkeit von Kenntnissen über zumindest die unterschiedlichen Eigenschaften der unterschiedlichen Energiespeicherkomponenten erfolgende Steuerung der Verschaltung wenigstens einer der unterschiedlichen Energiequellen mit wenigstens einer der unterschiedlichen Energiespeicherkomponenten und der Verschaltung wenigstens einer der unterschiedlichen Energiespeicherkomponenten mit wenigstens einer der unterschiedlichen Energienutzerkomponenten können bei der Versorgung über die zwischengespeicherte Energie auftretende Energiewandlungsverluste insbesondere kontinuierlich und automatisch minimiert werden, was den Gesamtwirkungsgrad der Produktionsanlage bzw. einer betreffenden Teileinheit davon deutlich erhöht. Zudem wird die zur Verfügung stehende Energie ökonomisch optimal genutzt. Mit der über die ersten Verschaltungsmittel bereitgestellte Vielzahl von Verschaltungsmöglichkeiten kann eine jeweilige Energiequelle je nach Bedarf unterschiedliche Energiespeicherkomponenten aufladen. Mit der über die zweiten Verschaltungsmittel bereitgestellte Vielzahl von Verschaltungsmöglichkeiten kann ein jeweiliger Energienutzer der Produktionsanlage bei Bedarf Energie aus unterschiedlichen Energiespeicherkomponenten beziehen. Dabei erfolgt die Steuerung dieser Verschaltungsmittel insbesondere so, dass kontinuierlich und automatisch eine Minimierung der aufgrund einer jeweiligen Energiewandlung auftretenden Verluste erfolgt.

Bevorzugt umfasst die Mehrzahl von unterschiedlichen Energiequellen Überwärme, bei einem jeweiligen Bahnabriss auftretenden überschüssigen Dampf, bei Abbremsvorgängen im System auftretende Bremsenergie, extern erzeugte Energie wie beispielsweise aus Nachtstrom erhaltene Energie, Energie aus wenigstens einer regenerativen Quelle und/oder dergleichen.

Als regenerative Quelle kann beispielsweise eine Solaranlage vorgesehen sein. Alternativ oder zusätzlich kann auch eine Windanlage genutzt werden. Eine jeweilige regenerative Quelle kann beispielsweise auf dem Firmengelände installiert sein.

Die Mehrzahl von unterschiedlichen Energiespeicherkomponenten umfasst beispielsweise mechanische, elektrische, thermische, chemische und/oder thermochemische Energiespeicherkomponenten. So kann zur Energiespeicherung unter anderem beispielsweise eine Speicherung der Wärme in einem Sorptionsspeicher, eine Speicherung über Wasserkraft in einem Pumpspeicherwerk, eine Speicherung in einem elektrischen Akkumulator und/oder dergleichen vorgesehen sein.

Die unterschiedlichen Energiespeicherkomponenten können zumindest teilweise jeweils mehrere verschiedene Energiespeicher der der jeweiligen Energiespeicherkomponente entsprechenden Art umfassen.

So kann eine mechanische Energiespeicherkomponente beispielsweise ein Pumpspeicherwerk, einen Rotationsspeicher, einen Druckluftspeicher und/oder dergleichen umfassen. Eine elektrische Energiespeicherkomponente kann beispielsweise supraleitende Spulen, einen Kondensator und/oder dergleichen umfassen. Eine thermische Energiespeicherkomponente umfasst beispielsweise einen Wärmespeicher, einen Dampfkessel und/oder dergleichen. Eine chemische Energiespeicherkomponente kann beispielsweise eine Batterie oder Akkumulator, eine Redox-Flow-Zelle, Brennstoffzellen und/oder dergleichen umfassen.

Die Mehrzahl von unterschiedlichen Energienutzerkomponenten umfasst vorteilhafterweise eine Energie in Form von elektrischem Strom benötigende Energienutzerkomponente, eine Energie in Form von Wärme benötigende Energienutzerkomponente und/oder eine Energie in Form von Kraft benötigende Energienutzerkomponente.

Die unterschiedlichen Energienutzerkomponenten können zumindest teilweise jeweils mehrere verschiedene Energienutzer der der jeweiligen Energienutzerkomponente entsprechenden Art umfassen.

Die bei der Ansteuerung der Verschaltungsmittel berücksichtigten Kenntnisse über die unterschiedlichen Eigenschaften der unterschiedlichen Energiespeicherkomponenten können beispielsweise deren Wirkungsgrade bei verschiedenen Betriebsarten usw. umfassen.

Bevorzugt ist die Steuereinheit zudem ausgeführt, die Verschaltungsmittel in Abhängigkeit von Kenntnissen über bei der Energiewandlung zwischen den verschiedenen Energiearten auftretende Verluste anzusteuern.

Alternativ oder zusätzlich ist es auch von Vorteil, wenn die Steuereinheit ausgeführt ist, die Verschaltungsmittel in Abhängigkeit von Kenntnissen über bei den Energiespeicherkomponenten auftretende Speicherverluste anzusteuern.

Alternativ oder zusätzlich ist auch denkbar, die Steuereinheit so auszuführen, dass die Verschaltungsmittel in Abhängigkeit von insbesondere aktualisierbaren Kenntnissen über den jeweiligen Ladezustand der Energiespeicherkomponenten angesteuert werden. Dabei können insbesondere auch Mittel zur Erfassung des jeweiligen Ladezustandes der Energiespeicherkomponenten vorgesehen sein.

Gemäß einer bevorzugten praktischen Ausführungsform des erfindungsgemäßen Systems ist die Steuereinheit zudem ausgeführt, die Verschaltungsmittel in Abhängigkeit von Kenntnissen über eine Energieverbrauchsprognose bezüglich der Energienutzerkomponenten, über eine Prognose der aus einer oder mehreren regenerativen Quellen zur Verfügung stehenden Energie und/oder über eine Prognose bezüglich des Betriebs der Produktionsanlage und der im Verlauf des Betriebs verfügbaren überschüssigen, speicherbaren Energie anzusteuern.

Dabei können die Kenntnisse über die Energieverbrauchsprognose bezüglich der Energienutzerkomponenten zumindest teilweise auf einem für den Betrieb der Produktionsanlage bestimmten Produktionsplan basieren.

Die Steuereinheit kann vorteilhafterweise auch ausgeführt sein, die Verschaltungsmittel in Abhängigkeit von Kenntnissen über zeitabhängige Kosten der extern erzeugten Energie und/oder über zeitabhängige Energiekosten anzusteuern.

Die von der Steuereinheit bei der Ansteuerung der Verschaltungsmittel berücksichtigten Kenntnisse sind zweckmäßigerweise in einem Daten- und/oder Programmspeicher der Steuereinheit insbesondere in Tabellenform, als Regelwissen und/oder als mathematisches Modell insbesondere zumindest teilweise aktualisierbar gespeichert.

Als Regelwissen ist beispielsweise Regelwissen denkbar, wie es in Expertensystemen oder Fuzzy-Reglern vorgesehen ist.

Ein einfaches Beispiel für das genannte Regelwissen ergibt sich aus folgendem: "WENN der Ladezustand oder Füllgrad des thermischen Speichers hoch UND die Umgebungstemperatur sehr gering sind, DANN sind die Speicherverluste mittel" wobei die Bewertungen "hoch", "sehr gering" und "mittel" beispielsweise im Sinne der Fuzzy-Logik definiert sein können.

Es können zumindest im Wesentlichen alle oder ein Teil der Energienutzerkomponenten der Produktionsanlage in die erfindungsgemäße computergestützte Optimierung des Gesamtwirkungsgrades einbezogen sein. Bevorzugt ist die Steuereinheit zudem ausgeführt, die Verschaltungsmittel in Abhängigkeit vom jeweiligen Betriebszustand der Produktionsanlage anzusteuern. Dabei können insbesondere auch Mittel zur Erfassung des jeweiligen Betriebszustandes vorgesehen sein.

Die Steuereinheit kann also beispielsweise ausgeführt sein, bei einem Maschinenstillstand oder Stillstand der Produktionsanlage zunächst zu entscheiden, wie der überschüssige Dampf zu speichern ist. Dabei ergeben sich durch eine entsprechende Ansteuerung der Verschaltungsmittel beispielsweise die folgenden Möglichkeiten:
- Speicherung in einem Sorptionsspeicher (direkt)
- Umwandlung der Energie in elektrische Energie, zum Beispiel mittels eines thermoelektrischen Generators, und anschließende
   a) Speicherung der elektrischen Energie in einem Akkumulator und
   b) Speicherung der Restwärme in einem Sorptionsspeicher.

Da die Steuereinheit die Eigenschaften der Energiespeicherkomponenten kennt, weiß sie, dass die Speicherung in einem Pumpspeicherwerk im zuvor genannten rein beispielhaften Fall nicht in Frage kommt. Ein Pumpspeicherwerk kann nur dann geladen werden, wenn die überschüssige Energie kontinuierlich über einen längeren Zeitraum anfällt.

Die Steuereinheit weiß beispielsweise aus einer Bedarfsprognose in Verbindung mit dem Ladezustand oder Füllstand der Energiespeicherkomponenten, dass Wärmeenergie bereits mehr als ausreichend gespeichert ist, dass jedoch für elektrische Energie noch Bedarf besteht. Sie entscheidet sich daher beim vorliegenden Beispiel für die zweite Variante einer Umwandlung der Energie in elektrische Energie.

Beim Abstellen der Maschine bzw. Produktionsanlage könnte sich eine andere Situation ergeben. So wird nach einem solchen Abstellen in der Regel viel Wärme benötigt, um die Anlage und die betreffenden Hallen wieder auf die normale Temperatur zu bringen. In diesem Fall wäre beim genannten beispielhaften Fall die erste Variante von Vorteil, das heißt eine direkte Speicherung im Sorptionsspeicher, bei dem es sich um einen thermochemischen Wärmespeicher handelt.

Es ist beispielsweise auch ein solches Szenario denkbar, bei dem die Produktionsanlage inklusive der Hallen und Tanks nach dem Abstellen erwärmt wird. In einem solchen Fall kann die Steuereinheit beispielsweise die folgende Strategie zur Energienutzung wählen:
- alle verfügbaren Energiespeicherkomponenten werden gemeinsam mit Primärenergie verwendet, um die Produktionsanlage zu erwärmen. Aufgrund des Einsatzes der Energiespeicherkomponenten werden beispielsweise teure Stromspitzen vermieden. Die Energiespeicherkomponenten werden hier also vor allem in der kritischen Zeitspanne eingesetzt, in der ansonsten besonders viel Strom verbraucht werden würde.
- Die Energiespeicherkomponenten werden so stark belastet, dass sie nahezu entleert werden, wenn die Maschine bzw. Produktionsanlage mit der Produktion beginnt. So weiß die Steuereinheit beispielsweise aus historischen Daten bzw. gespeicherter Erfahrung, dass sich nach einem langen Stillstand in kurzer Folge mehrere Bahnabrisse ereignen. Die Steuereinheit weiß daher auch, dass nach dem Anfahren viel Energie in Form von überschüssigem Dampf zur Verfügung steht, die gespeichert werden kann.

Die soeben genannten Fälle sind rein beispielhaft. Grundsätzlich ist auch eine beliebige andere Ansteuerung der Verschaltungsmittel denkbar.

Vorteilhafterweise kann auch eine Kraft-Wärme-Kopplung und/oder eine Wärmepumpe zum Einsatz kommen. In diesem Fall kann die Steuereinheit beispielsweise auch so ausgeführt sein, dass sie beispielsweise den Anfahrprozess zusätzlich dadurch optimiert, dass sie die spezifischen Vorteile der genannten Kraft-Wärme-Kopplung bzw. Wärmepumpe mit einbezieht.

Besonders vorteilhaft ist die Verwendung des erfindungsgemäßen Systems bei einer Anlage zur Papierherstellung, die eine Papiermaschine mit vorgeschalteter Stoffaufbereitung und Konstant-Teil zur Entlüftung der Faserstoffsuspension und zur Einstellung der Konzentration der Faserstoffsuspension sowie zumindest eine nachgeordnete Bahn-Aufwickeleinheit umfasst, wobei vorzugsweise die im Dauerbetrieb arbeitende Papiermaschine zusätzlich die Einheit zur Rohstoffherstellung umfasst, sowie die Verwendung des erfindungsgemäßen Systems bei einer Anlage zur Veredelung einer Papier-, Karton-, Tissue-Faserstoffbahn oder dergleichen.

Die Erfindung wird im Folgenden anhand von Ausführungsbeispielen unter Bezugnahme auf die Zeichnung näher erläutert; in dieser zeigen:
- Fig. 1: eine schematische Darstellung einer rein beispielhaften Ausführungsform eines Systems zur computergestützten Optimierung des Gesamtwirkungsgrades einer Produktionsanlage zur Herstellung und/oder Veredelung einer Materialbahn und
- Fig. 2: eine rein beispielhafte Eingangsmatrix zur Ansteuerung der Verschaltungsmittel über die Steuereinheit.

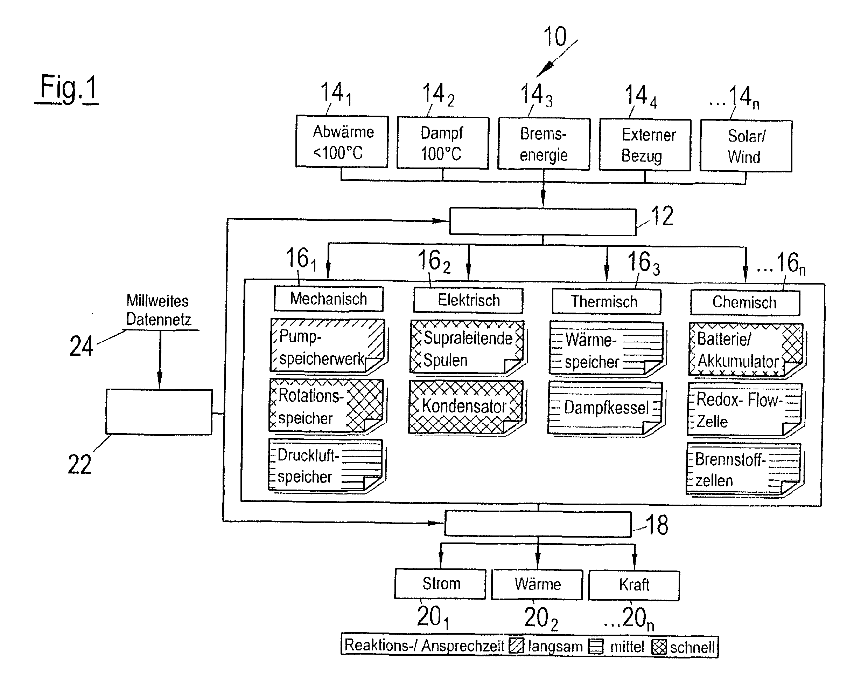

Fig. 1 zeigt in schematischer Darstellung eine rein beispielhafte Ausführungsform eines Systems 10 zur computergestützten Optimierung des Gesamtwirkungsgrades einer Produktionsanlage oder zumindest einer Teileinheit einer Produktionsanlage zur Herstellung und/oder Veredelung einer Materialbahn, bei der es sich insbesondere um eine Faserstoffbahn wie insbesondere eine Papier-, Karton-, Tissue-Faserstoffbahn oder dergleichen handeln kann.

Das System 10 umfasst erste Verschaltungsmittel 12, die zwischen einerseits einer Mehrzahl von unterschiedlichen Energiequellen 14₁ - 14ₙ und andererseits einer Mehrzahl von unterschiedlichen Energiespeicherkomponenten 16₁ - 16ₙ vorgesehen sind und zur wahlweisen Verbindung zwischen wenigstens einer der unterschiedlichen Energiequellen mit wenigstes einer der unterschiedlichen Energiespeicherkomponenten ansteuerbar sind.

Zudem umfasst das System 10 zweite Verschaltungsmittel 18, die zwischen einerseits der Mehrzahl von unterschiedlichen Energiespeicherkomponenten 16₁ - 16ₙ und andererseits einer Mehrzahl von unterschiedlichen Energienutzerkomponenten 20₁ - 20ₙ der Produktionsanlage vorgesehen sind und zur wahlweisen Verbindung wenigstens einer der unterschiedlichen Energiespeicherkomponenten mit wenigstens einer der unterschiedlichen Energienutzerkomponenten ansteuerbar sind.

Zudem umfasst das System 10 eine computerbasierte Steuereinheit 22, die dazu ausgeführt ist, die Verschaltungsmittel 12, 18 in Abhängigkeit von Kenntnissen über zumindest die unterschiedlichen Eigenschaften der unterschiedlichen Energiespeicherkomponenten 16₁ - 16ₙ anzusteuern, um bei der Versorgung der Energienutzerkomponenten 20₁ - 20ₙ über die zwischengespeicherte Energie aufgrund einer Energiewandlung auftretende Verluste zu minimieren.

Die Mehrzahl von unterschiedlichen Energiequellen 14₁ - 14ₙ kann Über- oder Abwärme 14₁, bei einem jeweiligen Bahnabriss auftretenden überschüssigen Dampf 14₂, bei Abbremsvorgängen im System 10 auftretende Bremsenergie 14₃, extern erzeugte Energie 14₄ wie insbesondere aus Nachtstrom erhaltene Energie, Energie 14ₙ aus wenigstens einer regenerativen Quelle und/oder dergleichen umfassen.

Die Mehrzahl von unterschiedlichen Energiespeicherkomponenten 16₁ - 16ₙ umfasst beispielsweise mechanische 16₁, elektrische 16₂, thermische 16₃, chemische 16ₙ und/oder thermochemische Energiespeicherkomponenten.

Dabei können die unterschiedlichen Energiespeicherkomponenten 16₁-16ₙ zumindest teilweise jeweils mehrere verschiedene Energiespeicher der der jeweiligen Energiespeicherkomponente entsprechenden Art umfassen.

Wie sich aus der Fig. 1 ergibt, kann die mechanische Energiespeicherkomponente 16₁ beispielsweise ein Pumpspeicherwerk, einen Rotationsspeicher, einen Druckluftspeicher und/oder dergleichen umfassen. Die elektrische Energiespeicherkomponente 16₂ kann beispielsweise supraleitende Spulen, einen Kondensator und/oder dergleichen umfassen. Die thermische Energiespeicherkomponente 16₃ kann beispielsweise einen Wärmespeicher, einen Dampfkessel und/oder dergleichen umfassen. Die chemische Energiespeicherkomponente 16ₙ kann beispielsweise eine Batterie oder Akkumulator, eine Redox-Flow-Zelle, Brennstoffzellen und/oder dergleichen umfassen. Dabei handelt es sich bezüglich der Reaktions- und/oder Ansprechzeit bei dem Pumpspeicherwerk um einen relativ langsamen Energiespeicher, bei dem Druckluftspeicher, dem Wärmespeicher, dem Dampfkessel, der Redox-Flow-Zelle und den Brennstoffzellen um mittlere Energiespeicher und bei dem Rotationsspeicher, den supraleitenden Spulen, dem Kondensator und der Batterie bzw. Akkumulator um relativ schnelle Energiespeicher.

Die Mehrzahl von unterschiedlichen Energienutzerkomponenten 20₁ - 20ₙ kann beispielsweise eine Energie in Form von elektrischem Strom benötigende Energienutzerkomponente 20₁, eine Energie in Form von Wärme benötigende Energienutzerkomponente 20₂ und/oder eine Energie in Form von Kraft benötigende Energienutzerkomponente 20ₙ umfassen.

Dabei können die unterschiedlichen Energienutzerkomponenten 20₁ - 20ₙ zumindest teilweise jeweils mehrere verschiedene Energienutzer der der jeweiligen Energienutzerkomponente entsprechenden Art umfassen.

Die vorzugsweise mit einem sich über die gesamte Produktionsanlage erstreckenden Datennetz 24 verbundene Steuereinheit 22 kann insbesondere ausgeführt sein, die Verschaltungsmittel 12, 18 in Abhängigkeit von Kenntnissen über bei der Energiewandlung zwischen den verschiedenen Energiearten auftretende Verluste, in Abhängigkeit von Kenntnissen über bei den Energiespeicherkomponenten 16₁ - 16ₙ auftretende Speicherverluste, in Abhängigkeit von insbesondere aktualisierbaren Kenntnissen über den jeweiligen Ladezustand oder Füllgrad der Energiespeicherkomponenten 16₁ - 16ₙ, in Abhängigkeit von Kenntnissen über eine Energieverbrauchsprognose bezüglich der Energienutzerkomponenten, über eine Prognose der aus einer oder mehreren regenerativen Quellen 14ₙ zur Verfügung stehenden Energie und/oder über eine Prognose bezüglich des Betriebs der Produktionsanlage und der im Verlauf des Betriebs verfügbaren überschüssigen, speicherbaren Energie und/oder in Abhängigkeit von Kenntnissen über zeitabhängige Kosten der extern erzeugten Energie 14₄ und/oder über zeitabhängige Energiekosten anzusteuern.

Die Kenntnisse über die Energieverbrauchsprognose bezüglich der Energienutzerkomponenten 20₁ - 20ₙ können zumindest teilweise auf einem für den Betrieb der Produktionsanlage bestimmten Produktionsplan basieren.

Die von der Steuereinheit 22 bei der Ansteuerung der Verschaltungsmittel 12, 18 berücksichtigten Kenntnisse können beispielsweise in einem Daten- und/oder Programmspeicher der Steuereinheit insbesondere in Tabellenform, als Regelwissen und/oder als mathematisches Modell insbesondere zumindest teilweise aktualisierbar gespeichert sein.

Zudem kann die Steuereinheit 22 ausgeführt sein, die Verschaltungsmittel 12, 18 in Abhängigkeit vom jeweiligen Betriebszustand der Produktionsanlage anzusteuern.

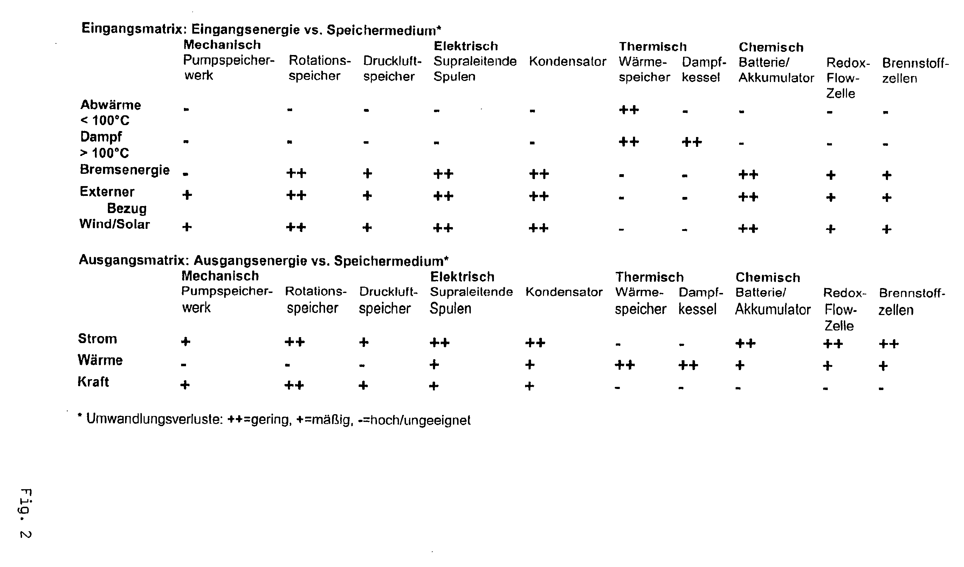

Fig. 2 zeigt eine rein beispielhafte Eingangsmatrix zur Ansteuerung der Verschaltungsmittel 12, 18 über die Steuereinheit 22. In dieser beispielsweise der Absetzung der Umwandlungsverluste und der Verschaltbarkeit dienenden Eingangsmatrix ist die Eingangsenergie gegenüber dem Speichermedium dargestellt. Eine solche Eingangsmatrix kann insbesondere in einem Daten- und7oder Programmspeicher der Steuereinheit 22 gespeichert sein.

### Bezugszeichenliste

- 10: System
- 12: erste Verschaltungsmittel
- 14₁ - 14ₙ: Energiequellen
- 16₁ - 16ₙ: Energiespeicherkomponenten
- 18: zweite Verschaltungsmittel
- 20₁ - 20ₙ: Energienutzerkomponenten
- 22: Steuereinheit
- 24: Datennetz

## Patentansprüche

1. System (10) zur computergestützten Optimierung des Gesamtwirkungsgrades einer Produktionsanlage oder zumindest einer Teileinheit einer Produktionsanlage zur Herstellung und/oder Veredelung einer Materialbahn,
**gekennzeichnet durch**
zwischen einerseits einer Mehrzahl von unterschiedlichen Energiequellen (14)₁ - 14ₙ) und andererseits einer Mehrzahl von unterschiedlichen Energiespeicherkomponenten (16₁ - 16ₙ) vorgesehene erste Verschaltungsmittel (12), die zur wahlweisen Verbindung wenigstens einer der unterschiedlichen Energiequellen mit wenigstens einer der unterschiedlichen Energiespeicherkomponenten ansteuerbar sind,
zwischen einerseits der Mehrzahl von unterschiedlichen Energiespeicherkomponenten (16₁ - 16ₙ) und anderseits einer Mehrzahl von unterschiedlichen Energienutzerkomponenten (20₁ - 20ₙ) der Produktionsanlage vorgesehene zweite Verschaltungsmittel (18), die zur wahlweisen Verbindung wenigstens einer der unterschiedlichen Energiespeicherkomponenten mit wenigstens einer der unterschiedlichen Energienutzerkomponenten ansteuerbar sind, und
eine computerbasierte Steuereinheit (22), die dazu ausgeführt ist, die Verschaltungsmittel (12, 18) in Abhängigkeit von Kenntnissen über zumindest die unterschiedlichen Eigenschaften der unterschiedlichen Energiespeicherkomponenten (16₁ - 16ₙ) anzusteuern, um bei der Versorgung der Energienutzerkomponenten (20₁ - 20ₙ) über die zwischengespeicherte Energie aufgrund einer Energiewandlung auftretende Verluste zu minimieren.

2. System nach Anspruch 1,
**dadurch gekennzeichnet,**
**dass** die Mehrzahl von unterschiedlichen Energiequellen (14₁ - 14ₙ) Überwärme (14₁), bei einem jeweiligen Bahnabriss auftretenden überschüssigen Dampf (14₂), bei Abbremsvorgängen im System (10) auftretende Bremsenergie (14₃), extern erzeugte Energie (14₄) wie insbesondere aus Nachtstrom erhaltene Energie, Energie (14ₙ) aus wenigstens einer regenerativen Quelle und/oder dergleichen umfasst.

3. System nach Anspruch 1 oder 2,
**dadurch gekennzeichnet,**
**dass** die Mehrzahl von unterschiedlichen Energiespeicherkomponenten (16₁ - 16ₙ) mechanische (16₁), elektrische (16₂), thermische (16₃), chemische (16ₙ) und/oder thermochemische Energiespeicherkomponenten umfasst.

4. System nach Anspruch 3,
**dadurch gekennzeichnet,**
**dass** die unterschiedlichen Energiespeicherkomponenten (16₁ - 16ₙ) zumindest teilweise jeweils mehrere verschiedene Energiespeicher der der jeweiligen Energiespeicherkomponente entsprechenden Art umfassen.

5. System nach einem der vorhergehenden Ansprüche,
**dadurch gekennzeichnet,**
**dass** die Mehrzahl von unterschiedlichen Energienutzerkomponenten (20₁ - 20ₙ) eine Energie in Form von elektrischem Strom benötigende Energienutzerkomponente (20₁), eine Energie in Form von Wärme benötigende Energienutzerkomponente (20₂) und/oder eine Energie in Form von Kraft benötigende Energienutzerkomponente (20ₙ) umfasst.

6. System nach Anspruch 5,
**dadurch gekennzeichnet,**
**dass** die unterschiedlichen Energienutzerkomponenten (20₁ - 20ₙ) zumindest teilweise jeweils mehrere verschiedene Energienutzer der der jeweiligen Energienutzerkomponente entsprechenden Art umfassen.

7. System nach einem der vorhergehenden Ansprüche,
**dadurch gekennzeichnet,**
**dass** die Steuereinheit (22) zudem ausgeführt ist, die Verschaltungsmittel (12, 18) in Abhängigkeit von Kenntnissen über bei der Energiewandlung zwischen den verschiedenen Energiearten auftretende Verluste anzusteuern.

8. System nach einem der vorhergehenden Ansprüche,
**dadurch gekennzeichnet,**
**dass** die Steuereinheit (22) zudem ausgeführt ist, die Verschaltungsmittel (12, 18) in Abhängigkeit von Kenntnissen über bei den Energiespeicherkomponenten (16₁ - 16ₙ) auftretende Speicherverluste anzusteuern.

9. System nach einem der vorhergehenden Ansprüche,
**dadurch gekennzeichnet,**
**dass** die Steuereinheit (22) zudem ausgeführt ist, die Verschaltungsmittel (12, 18) in Abhängigkeit von insbesondere aktualisierbaren Kenntnissen über den jeweiligen Ladezustand der Energiespeicherkomponenten (16₁ - 16ₙ) anzusteuern.

10. System nach einem der vorhergehenden Ansprüche,
**dadurch gekennzeichnet,**
**dass** die Steuereinheit (22) zudem ausgeführt ist, die Verschaltungsmittel (12, 18) in Abhängigkeit von Kenntnissen über eine Energieverbrauchsprognose bezüglich der Energienutzerkomponenten, über eine Prognose der aus einer oder mehreren regenerativen Quellen (14ₙ) zur Verfügung stehenden Energie und/oder über eine Prognose bezüglich des Betriebs der Produktionsanlage und der im Verlauf des Betriebs verfügbaren überschüssigen, speicherbaren Energie anzusteuern.

11. System nach Anspruch 10,
**dadurch gekennzeichnet,**
**dass** die Kenntnisse über die Energieverbrauchsprognose bezüglich der Energienutzerkomponenten (20₁ - 20ₙ) zumindest teilweise auf einem für den Betrieb der Produktionsanlage bestimmten Produktionsplan basieren.

12. System nach einem der vorhergehenden Ansprüche,
**dadurch gekennzeichnet,**
**dass** die Steuereinheit (22) zudem ausgeführt ist, die Verschaltungsmittel (12, 18) in Abhängigkeit von Kenntnissen über zeitabhängige Kosten der extern erzeugten Energie (14₄) und/oder über zeitabhängige Energiekosten anzusteuern.

13. System nach einem der vorhergehenden Ansprüche,
**dadurch gekennzeichnet,**
**dass** die von der Steuereinheit (22) bei der Ansteuerung der Verschaltungsmittel (12, 18) berücksichtigten Kenntnisse in einem Daten- und/oder Programmspeicher der Steuereinheit insbesondere in Tabellenform, als Regelwissen und/oder als mathematisches Modell insbesondere zumindest teilweise aktualisierbar gespeichert sind.

14. System nach einem der vorhergehenden Ansprüche,
**dadurch gekennzeichnet,**
**dass** die Steuereinheit (22) zudem ausgeführt ist, die Verschaltungsmittel (12, 18) in Abhängigkeit vom jeweiligen Betriebszustand der Produktionsanlage anzusteuern.

15. Verwendung des Systems nach einem der vorhergehenden Ansprüche bei einer Anlage zur Papierherstellung, die eine Papiermaschine mit vorgeschalteter Stoffaufbereitung und Konstant-Teil zur Entlüftung der Faserstoffsuspension und zur Einstellung der Konzentration der Faserstoffsuspension sowie zumindest eine nachgeordnete Bahn-Aufwickeleinheit umfasst, wobei vorzugsweise die im Dauerbetrieb arbeitende Papiermaschine zusätzlich die Einheit zur Rohstoffherstellung umfasst, oder bei einer Anlage zur Veredelung einer Papier-, Karton-, Tissue-Faserstoffbahn oder dergleichen.

## Claims

1. System (10) for the computer-aided optimization of the overall efficiency of a production installation or at least one subunit of a production installation for producing and/or finishing a material web,
**characterized by**
first interconnection means (12) which are provided between firstly a plurality of different energy sources (14₁ - 14ₙ) and secondly a plurality of different energy storage components (16₁ - 16ₙ) and which can be actuated for the selective connection of at least one of the different energy sources to at least one of the different energy storage components,
second interconnection means (18) which are provided between firstly the plurality of different energy storage components (16₁ - 16ₙ) and secondly a plurality of different energy user components (20₁ - 20ₙ) of the production installation and which can be actuated for the purpose of selective connection of at least one of the different energy storage components to at least one of the different energy user components, and
a computer-based control unit (22) which is designed to actuate the interconnection means (12, 18) on the basis of knowledge about at least the different properties of the different energy storage components (16₁ - 16ₙ) in order to minimize losses which occur on account of energy conversion when the energy user components (20₁ - 20ₙ) are supplied with power by means of the temporarily stored energy.

2. System according to Claim 1,
**characterized in that**
the plurality of different energy sources (14₁ - 14ₙ) comprises excess heat (14₁), excess steam (14₂) occurring during a respective web break, braking energy (14₃) occurring during braking operations in the system (10), externally generated energy (14₄) such as in particular energy obtained from night-time power, energy (14ₙ) from at least one regenerative source and/or the like.

3. System according to Claim 1 or 2,
**characterized in that**
the plurality of different energy storage components (16₁ - 16ₙ) comprises mechanical (16₁), electrical (16₂), thermal (16₃), chemical (16ₙ) and/or thermochemical energy storage components.

4. System according to Claim 3,
**characterized in that**
the different energy storage components (16₁ - 16ₙ) comprise, at least to some extent, a plurality of different energy stores each of the type corresponding to the respective energy storage component.

5. System according to one of the preceding claims,
**characterized in that**
the plurality of different energy user components (20₁ - 20ₙ) comprises an energy user component (20₁) needing energy in the form of electric power, an energy user component (20₂) needing energy in the form of heat and/or an energy user component (20ₙ) needing energy in the form of force.

6. System according to Claim 5,
**characterized in that**
the different energy user components (20₁ - 20ₙ) comprise, at least to some extent, a plurality of different energy users each of the type corresponding to the respective energy user component.

7. System according to one of the preceding claims,
**characterized in that**
the control unit (22) is additionally designed to activate the interconnection means (12, 18) on the basis of knowledge about losses occurring during the energy conversion between the various types of energy.

8. System according to one of the preceding claims,
**characterized in that**
the control unit (22) is additionally designed to activate the interconnection means (12, 18) on the basis of knowledge about storage losses occurring in the energy storage components (16₁ - 16ₙ) .

9. System according to one of the preceding claims,
**characterized in that**
the control unit (22) is additionally designed to activate the interconnection means (12, 18) on the basis of knowledge, in particular knowledge that can be updated, about the respective state of charge of the energy storage components (16₁ - 16ₙ).

10. System according to one of the preceding claims,
**characterized in that**
the control unit (22) is additionally designed to activate the interconnection means (12, 18) on the basis of knowledge about an energy consumption forecast relating to the energy user components, about a forecast of the energy available from one or more regenerative sources (14ₙ) and/or about a forecast relating to the operation of the production installation and the excess energy that is available during the course of the operation and can be stored.

11. System according to Claim 10,
**characterized in that**
the knowledge about the energy consumption forecast relating to the energy user components (20₁ - 20ₙ) is at least partly based on a production plan determined for the operation of the production installation.

12. System according to one of the preceding claims,
**characterized in that**
the control unit (22) is additionally designed to activate the interconnection means (12, 18) on the basis of knowledge about time-dependent costs of the externally generated energy (14₄) and/or about time-dependent energy costs.

13. System according to one of the preceding claims,
**characterized in that**
the knowledge taken into account by the control unit (22) when activating the interconnection means (12, 18) is stored in a data and/or program memory of the control unit, in particular in tabular form, as control knowledge and/or as a mathematical model, in particular such that it can at least partly be updated.

14. System according to one of the preceding claims,
**characterized in that**
the control unit (22) is additionally designed to activate the interconnection means (12, 18) on the basis of the respective operating state of the production installation.

15. Use of the system according to one of the preceding claims in a plant for paper production, which comprises a paper machine with stock preparation arranged upstream and approach flow section for deaerating the fibrous suspension and for adjusting the concentration of the fibrous suspension, and at least one web winding unit arranged downstream, the paper machine, operating continuously, preferably additionally comprising the unit for raw material production; or in a plant for finishing a paper, board, tissue fibrous web or the like.

## Revendications

1. Système (10) d'optimisation assistée par ordinateur du rendement global d'une installation de production ou d'au moins une unité faisant partie d'une installation de production destinée à fabriquer et/ou à transformer une nappe de matière,
**caractérisé par**
des premiers moyens de commutation (12) prévus entre d'une part plusieurs sources d'énergie différentes (14₁-14ₙ) et d'autre part plusieurs composants (16₁-16ₙ) différents d'accumulation d'énergie, qui peuvent être commandés pour relier de manière sélective au moins l'une des différentes sources d'énergie à au moins l'un des différents composants d'accumulation d'énergie,
des deuxièmes moyens de commutation (18) prévus entre d'une part les différents composants (16₁-6ₙ) d'accumulation d'énergie et d'autre part plusieurs composants différents (20₁-20ₙ) d'utilisation d'énergie de l'installation de production, qui peuvent être commandés pour relier sélectivement au moins l'un des différents composants d'accumulation d'énergie à au moins l'un des différents composants d'utilisation d'énergie et
une unité informatique de commande (22) configurée de manière à commander les moyens de commutation (12, 18) en fonction de connaissances concernant au moins les différentes propriétés des différents composants (16₁-16ₙ) d'accumulation d'énergie pour minimiser les pertes qui résultent d'une conversion de l'énergie lorsque les composants (20₁-20ₙ) d'utilisation d'énergie sont alimentés par l'énergie stockée,.

2. Système selon la revendication 1, **caractérisé en ce que** les différentes sources d'énergie (14₁-14ₙ) comprennent des chaleurs excédentaires (14₁), de la vapeur excédentaire (14₂) produite lors de l'érosion de la nappe, l'énergie de freinage (14₃) produite lors d'opérations de freinage dans le système (10), de l'énergie (14₄) produite extérieurement, par exemple en particulier de l'énergie obtenue par le courant de nuit, de l'énergie (14ₙ) provenant d'au moins une source renouvelable et/ou similaires.

3. Système selon les revendications 1 ou 2, **caractérisé en ce que** les différents composants (16₁-16ₙ) d'accumulation d'énergie comprennent des composants d'accumulation d'énergie mécanique (16₁), électrique (16₂), thermique (16₃), chimique (16ₙ) et/ou thermochimique.

4. Système selon la revendication 3, **caractérisé en ce que** les différents composants (16₁-16ₙ) d'accumulation d'énergie comprennent au moins en partie plusieurs accumulateurs d'énergie différents d'un type qui correspond à chaque composant d'accumulation d'énergie.

5. Système selon l'une des revendications précédentes, **caractérisé en ce que** les différents composants (20₁-20ₙ) d'utilisation d'énergie comprennent un composant (20₁) qui utilise l'énergie sous la forme de courant électrique, un composant (20₂) qui utilise l'énergie sous la forme de chaleur et/ou un composant (20ₙ) qui utilise l'énergie sous la forme de force mécanique.

6. Système selon la revendication 5, **caractérisé en ce que** les différents composants (20₁-20ₙ) d'utilisation d'énergie comprennent au moins en partie plusieurs utilisateurs d'énergie différents de type qui correspond à chaque composant d'utilisation d'énergie.

7. Système selon l'une des revendications précédentes, **caractérisé en ce que** l'unité de commande (22) est configurée en outre de manière à commander les moyens de commutation (12, 18) en fonction de connaissances concernant les pertes qui surviennent lors de la conversion d'énergie entre les différents types d'énergie.

8. Système selon l'une des revendications précédentes, **caractérisé en ce que** l'unité de commande (22) est configurée en outre de manière à commander les moyens de commutation (12, 18) en fonction de connaissances concernant les pertes d'accumulation qui surviennent sur les composants (16₁-16ₙ) d'accumulation d'énergie.

9. Système selon l'une des revendications précédentes, **caractérisé en ce que** l'unité de commande (22) est configurée en outre de manière à commander les moyens de commutation (12, 18) en fonction de connaissances, en particulier aptes à être actualisés, concernant l'état de charge de chacun des composants (16₁-16ₙ) d' accumulation d'énergie.

10. Système selon l'une des revendications précédentes, **caractérisé en ce que** l'unité de commande (22) est configurée en outre de manière à commander les moyens de commutation (12, 18) en fonction de connaissances concernant un pronostic de consommation d'énergie des composants utilisant de l'énergie, un pronostic sur l'énergie apte à être délivrée par une ou plusieurs sources renouvelables (14ₙ) et/ou un pronostic concernant la conduite de l'installation de production et de l'énergie excédentaire disponible en fonctionnement et accumulable.

11. Système selon la revendication 10, **caractérisé en ce que** les connaissances concernant le pronostic de consommation d'énergie des composants (20₁-20ₙ) d'utilisation d'énergie sont basées au moins en partie sur un plan de production défini pour la conduite de l'installation de production.

12. Système selon l'une des revendications précédentes, **caractérisé en ce que** l'unité de commande (22) est configurée en outre de manière à commander les moyens de commutation (12, 18) en fonction de connaissances concernant les coûts variables dans le temps de l'énergie (14₄) produite extérieurement et/ou des coûts en énergie variables dans le temps.

13. Système selon l'une des revendications précédentes, **caractérisé en ce que** les connaissances prises en compte par l'unité de commande (22) lors de la commande des moyens de commutation (12, 18) sont conservées en mémoire dans une mémoire de données et/ou une mémoire de programme de l'unité de commande, notamment sous forme de tableaux, sous la forme de règles et/ou sous la forme d'un modèle mathématique, en particulier de manière à pouvoir être en partie mises à jour.

14. Système selon l'une des revendications précédentes, **caractérisé en ce que** l'unité de commande (22) est configurée en outre de manière à commander les moyens de commutation (12, 18) en fonction de l'état de fonctionnement à tout instant de l'installation de production.

15. Utilisation du système selon l'une des revendications précédentes sur une installation de fabrication de papier qui comporte une machine à papier en amont de laquelle est raccordée une préparation des matières et une partie constante d'évacuation d'air de la suspension de fibres et d'ajustement de la concentration de la suspension de fibres, et suivie par une unité aval d'enroulement de la nappe, la machine à papier travaillant en continu et comportant de préférence également l'unité de préparation de la matière première, ou dans une installation de transformation d'une nappe de fibres de papier, de carton, de mouchoirs ou similaires.
